# EUROPÄISCHE PATENTSCHRIFT

(11) **EP 2 428 472 B1**
(45) Veröffentlichungstag und Bekanntmachung des Hinweises auf die Patenterteilung: **23.11.2016**
(21) Anmeldenummer: 11007510.8
(22) Anmeldetag: 14.09.2011
(51) Int. Cl.: B65G 47/88, H01F 7/16

(54) **Vereinzler mit elektrodynamischem Stellglied**
Separator with electrodynamic positioning member
Séparateur doté d'un actionneur électrodynamique

(30) Priorität: 14.09.2010 DE 102010045290
(43) Veröffentlichungstag der Anmeldung: 14.03.2012
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- EP-A1- 0 531 774
- EP-A1- 0 794 540
- EP-A1- 2 390 067
- DE-A1- 4 334 031
- JP-A- 7 263 221
- US-A- 4 419 643

## Beschreibung

Die Erfindung betrifft einen Vereinzler mit einem Gehäuse, mit einen verschiebbaren Schlitten, wobei der Schlitten im Gehäuse gelagert ist und teilweise über das Gehäuse hinausragt, mit einem am freien Ende des Schlittens angeordneten Stößel und mit einem im Gehäuse gelagerten Stellglied, wobei das Stellglied auf den verschiebbaren Schlitten wirkt, um den Stößel zwischen einer eingefahrenen und einer ausgefahrenen Stellung zu bewegen, wobei das Stellglied einen ortsfesten und einen beweglichen Teil aufweist und der Schlitten starr am beweglichen Teil angeordnet ist und wobei der ortsfeste Teil des Stellglieds - zum Antreiben des beweglichen Teils des Stellgliedes in beide Richtungen - aus einer elektrisch bestrombaren Spule besteht.

Ein Vereinzler ist eine Vorrichtung, mit deren Hilfe i.d.R. Werkstücke separiert werden, die in einer Reihe am Vereinzler vorbeigeführt werden. Der Vereinzler lagert in einem Gehäuse einen z.B. über eine zweifachwirkende, pneumatische ZylinderKolben-Einheit geführten Schlitten. Am freien Ende des Schlittens ist ein Stößel angeordnet. Ein derartiger Vereinzler ist aus einem Katalog der Sommer-Automatik GmbH & Co.KG bekannt. Im Katalog aus dem Jahr 2008 wird der Vereinzler unter der Bezeichnung "Serie VEG-B" geführt.

Die DE 199 20 889 A1 beschreibt einen Hubantrieb einer Sortiereinrichtung mit den Merkmalen des Oberbegriffs des Anspruchs 1.

Sein Stellglied besteht aus einem großvolumigen stationären Topfmagnet und einer beweglichen Tauchspule. Letztere ist mit einem Stößel verbunden, der zum Aussortieren ausgewählte Teilchen aus einem Materialfluss herausschießt.

Die EP 2 390 067 A1, welche unter Artikel 54(3) EPÜ fällt, offenbart ein Stellglied und einen Schlitten nach Anspruch 1, wobei das Stellglied auf den verschiebbaren Schlitten wirkt, um Greifelemente zwischen einer Offen- und Schließstellung zu bewegen.

Der vorliegenden Erfindung liegt die Problemstellung zugrunde, einen Vereinzler zu entwickeln, dessen Schlitten für seinen Antrieb einen geringen Energiebedarf hat. Zudem soll der Vereinzler aus möglichst wenigen, unkomplizierten Einzelteilen gefertigt sein. Sein Schlitten soll sich bei wartungsarmer, einfacher und sicherer Handhabung reaktionsschnell aus- und einfahren lassen und in seinen Endlagen sicher positioniert bleiben.

Diese Problemstellung wird mit den Merkmalen des Patentanspruchs 1 gelöst. Dazu besteht der bewegliche Teil des Stellglieds ein Topfmagnet ist, wobei der Topfmagnet aus einem aus einem Einsatzstahl gefertigten Topf, in dem ein permanentmagnetischer Kern eingelassen ist, wobei sich ein Ringspalt zwischen der Innenkontur des Topfes und dem permanentmagnetischen Kern befindet, in den die Spule hineinragt.

Das den Vereinzlerschlitten antreibende elektrodynamische Stellglied basiert auf einem aus dem Lautsprecherbereich bekannten Tauchspulenprinzip. Eine bestrombare Tauchspule eines Lautsprechers wird dabei linear beweglich im Spalt eines Topfmagnets geführt. Der Topfmagnet stellt ein konstantes Magnetfeld zur Verfügung. Ein Bestromen der Tauchspule führt aufgrund der prinzipbedingten Lorenzkraft zu einer Relativbewegung zwischen der Spule und dem Topfmagnet. Die Schubkraft dieses Stellglieds ist eine Funktion des Stromes. Die Richtung der Schubkraft wird durch die Spannungspolarität vorgegeben. Die Relativbewegung zwischen dem ortsfesten und dem beweglichen Teil des Stellgliedes wird benutzt, um den Vereinzlerschlitten bzw. den Stößel gegenüber seinem tragenden Gehäuse zu verschieben.

Im Ausführungsbeispiel ist die Tauchspule ortsfest am Vorrichtungsgehäuse befestigt, während der Topfmagnet als bewegliches Teil auf die entsprechenden Vereinzierteile wirkt. Selbstverständlich kann auch der Topfmagnet im Gehäuse ortsfest angeordnet sein, während die Tauchspule - wie beim Lautsprecher - die antreibende Relativbewegung ausführt.

Das elektrodynamische Stellglied, das auch ein konventioneller Hubmagnet sein kann, wird innerhalb des Gehäuses des Vereinzlers sowohl zum Ausfahren als auch zum Einfahren des Vereinzlerschlittens bzw. dessen Stößel bestromt.

Weitere Einzelheiten der Erfindung ergeben sich aus den Unteransprüchen und der nachfolgenden Beschreibung eines schematisch dargestellten Ausführungsbeispieles.
- Figur 1:: dimetrisch dargestellter Vereinzler, teilweise längsgeschnitten;
- Figur 2:: Längsschnitt zu Figur 1, mit ausgefahrenem Schlitten;
- Figur 3:: Längsschnitt zu Figur 1, jedoch mit eingefahrenem Schlitten;
- Figur 4:: Querschnitt durch die Gehäusemitte;

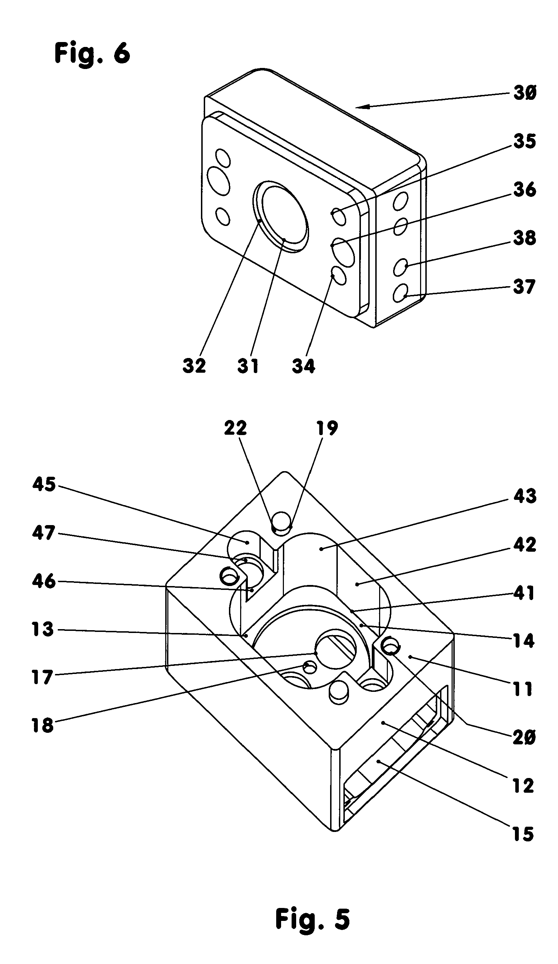

- Figur 5:: dimetrisch dargestelltes Gehäuse;
- Figur 6:: dimetrisch dargestellter Gehäusedeckel.

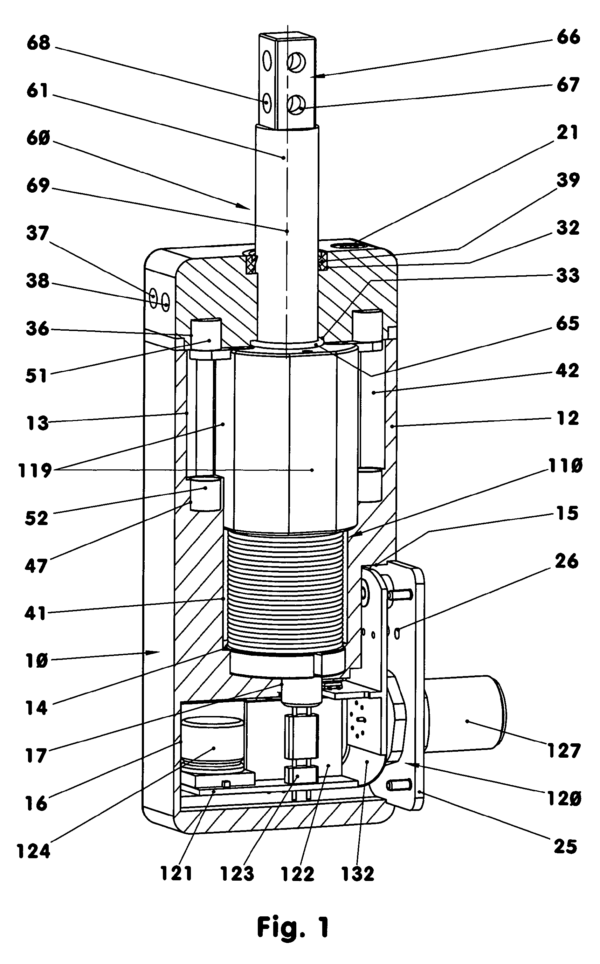

Die Figur 1 zeigt einen Vereinzler mit ausgefahrenem Schlitten (60). Im Bereich des Gehäuses (10) ist ein elektrodynamisches Stellglied (110) angeordnet. Das Stellglied (110) wirkt direkt auf einen Schlitten (60), der i.d.R. einen Stößel (70) trägt.

Nach Figur 1 besteht das Gehäuse (10, 30) im Wesentlichen aus einem Stellgliedgehäuse (10) und einem Gehäusedeckel (30). Beide Gehäuseteile sind aus einer Aluminiumlegierung hergestellt. Das gesamte Gehäuse (10, 30) ist z.B. 95 mm hoch, 38,5 mm breit und 27 mm tief. Seine Oberflächen sind hartcoatiert, bzw. anodisch oxidiert.

Das Stellgliedgehäuse (10) ist ein nahezu quaderförmiger Körper, dessen plane Oberseite (11) als Montagefuge gegenüber dem Gehäusedeckel (30) dient. In seiner Oberseite (11) und in seiner rechten Wandung (12) sind u.a. größere Ausnehmungen (13; 15, 16) angeordnet. Die in die Oberseite eingearbeitete Ausnehmung (13) ist eine zentrale Bohrung, die in drei Bereichen aufgefräst ist. Der größere, mittlere und obere Bereich (41) der Stufenbohrung (13) ist im Querschnitt zu einem Quadrat mit ausgerundeten zur Bauteilmittellinie parallelen Kanten aufgeweitet. Die Ausrundungen (43) haben einen Radius von 6 mm. Die planen Flanken (42) dieses Bereiches (41), sie sind 9,5 mm breit, dienen der Führung des beweglichen Teils des Stellgliedes (110). Die jeweils einander gegenüberliegenden Flanken (42) sind z.B. 21,5 mm voneinander entfernt. Ca. in der oberen Hälfte des Bereiches (41) sind in Querrichtung des Gehäuses (10) zwei einander gegenüberliegende langlochartige Verbreiterungen (45) angeordnet, die die Ausnehmung (41) in diesem Bereich auf 34,5 mm auf einer Breite von 6 mm verbreitert. In den beiden Böden (46) der Verbreiterungen (45) sind jeweils Sacklochbohrungen (47) eingearbeitet. Sie haben einen Durchmesser von 5 mm und sind ebenso tief. In jede Bohrung (47) ist, nach Figur 1, ein Permanentmagnet (52) eingeklebt oder eingepresst.

In die Verbreiterungen (45) kragen im oberen Bereich des beweglichen Teils des Stellgliedes (110) befestigte magnetisierbare Halteplatten (51, 52) hinein.

Im kleineren, unteren und zylindrischen Bereich der zentralen Bohrung (13) ist der unbewegliche Teil des Stellgliedes (110) zentriert angeordnet. Zwischen den beiden Bereichen liegt ein planer Bund (14).

Die Ausnehmung, die von der rechten Wandung (12) aus in das Stellgliedgehäuse eingearbeitet ist, besteht aus einer rechteckigen Ausnehmung (15) mit großem Querschnitt und geringer Tiefe, sowie einer daran anschließenden tiefen, ebenfalls rechteckigen Ausnehmung (16) mit kleinerem Querschnitt. In der tiefen Ausnehmung (16) ist auf einer unteren, horizontalen Platine (121) eine Elektronik zur Ansteuerung des Stellgliedes (110) untergebracht, während in der großflächigen Ausnehmung (15) eine seitliche Platine (125) sitzt, an der u.a. ein Gerätestecker (127), drei Leuchtdioden (126) und eine Aufsatzplatine (128) mit einem Hallsensor (131) angeordnet sind. Die z.B. rechtwinkelig zueinander platzierten Platinen (121, 125) sind über eine mit Leiterbahnen ausgestattete flexible Filmplatine (132) miteinander verbunden. Ggf. werden die Platinen (121, 125, 132) zwischen zwei einander gegenüberliegenden Kunststoffformteilen eingeklemmt. Dazu haben die Kunststoffformteile Führungsnuten, in die die Platinen ca. 0,5 mm tief eingesteckt sind.

Die Ausnehmung (15) wird mittels eines Gehäusedeckels (25) nahezu gasdicht verschlossen. Am Gehäusedeckel (25) ist die Platine (121) unter Zwischenlegung einer Distanzhülse (27) mittels einer Spezialverschraubung (28) befestigt. Zugleich trägt der Gehäusedeckel (25) den Gerätestecker (127). Zwischen der Platinenverschraubung (28) und dem Gerätestecker (127) befinden sich drei nebeneinander liegende Bohrungen (26), in die die Leuchtdioden (126) hineinragen.

Die Stufenbohrung (13) und die tiefe Ausnehmung (16) sind über drei nebeneinander liegende Bohrungen (17, 18) miteinander verbunden. Die mittlere, kleinere Bohrung ist eine Gewindebohrung (18), in der das ortsfeste Teil des Stellgliedes (110) verschraubt wird. In den beiden größeren Bohrungen (17) stecken Isolierhülsen, in denen die elektrischen Anschlüsse des Stellgliedes (110) in die untere Ausnehmung (16) geführt werden.

Der Gehäusedeckel (30) ist im Wesentlichen ein quaderförmiger Körper, der eine zentrale Bohrung (31) zum Durchführen des Schlittens (60) hat. Um die Bohrung (31) herum befindet sich auf der Deckeloberseite eine Eindrehung (32), in der ein Lippendichtring (39) angeordnet ist. Die Dichtlippe des Dichtringes (39) ist nach außen hin orientiert, um das Innere des Gehäuses (10, 30) schmutzfrei zu halten. Auch auf der Innenseite des Deckels (30) befindet sich um die Bohrung (31) herum eine weitere Eindrehung (33) zur Aufnahme eines anschlagdämpfenden O-Ringes (65).

In Gehäusequerrichtung sind neben der zentralen Bohrung (31) zwei im Durchmesser 5 mm messende und 5 mm tiefe Sacklochbohrungen (36) angeordnet. In jede Sacklochbohrung (36) ist, nach Figur 1, ein Permanentmagnet (51) eingeklebt oder eingepresst.

Neben jeder Sacklochbohrung (36) ist je eine Verschraubungsbohrung (34) mit Senkung für eine M3-Schraube - zum Verschrauben von Deckel (30) und Gehäuse (10) - und eine Passstiftbohrung (35) angeordnet.

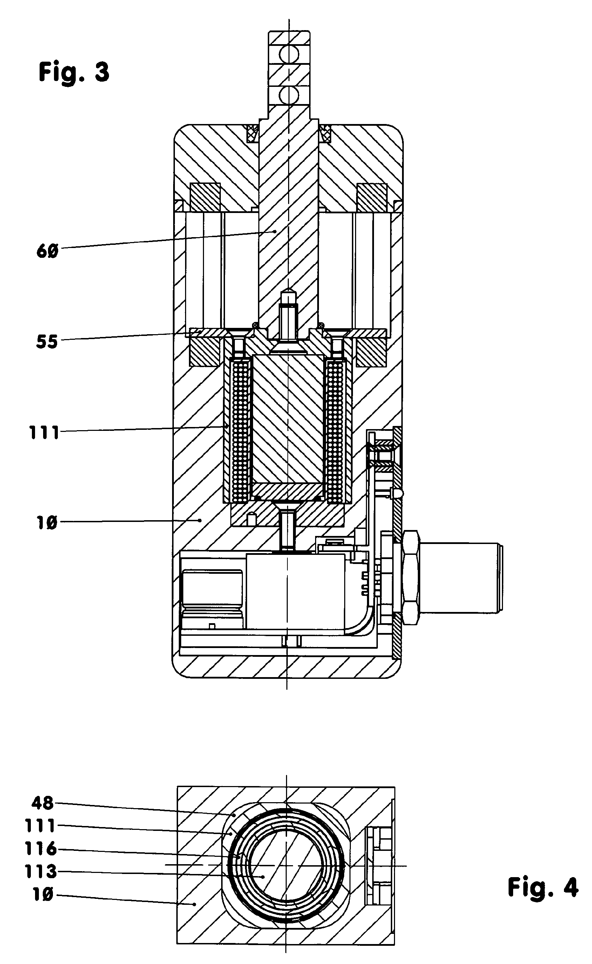

Auf der schmalen Seitenfläche des Deckels (30) befindet sich nach Figur 4 im mittleren Bereich zwei Passstiftbohrungen (38) und im äußeren Bereich Befestigungsbohrungen (37). Die Befestigungsbohrungen (37) haben auf der gegenüberliegenden Seitenfläche jeweils eine Einsenkung. Über sie kann der Vereinzler an einem diesen tragenden Maschinenteil befestigt werden.

Um die beiden Gehäuseteile (10, 30) miteinander zu verbinden, weist das Stellgliedgehäuse (10) z.B. vier, zur zentralen Stufenbohrung (13) parallele Bohrungen auf. In den Gewindebohrungen (20) der Oberseite (11), vgl. Figur 4, werden die Schrauben (21) eingeschraubt. In den beiden anderen Bohrungen (19) sitzen Passstifte (22), über die beide Gehäuseteile (10, 30) aneinander zentriert werden.

An der - hier nicht dargestellten - Unterseite des Stellgliedgehäuses (10) befinden sich vier weitere als Sacklöcher ausgebildete Gewindebohrungen, über die die Vorrichtung ebenfalls am tragenden Maschinenteil fixierbar ist. Zusätzlich weist die Unterseite auch zwei jeweils zwischen zwei Gewindebohrungen gelegene Zentrierbohrungen auf.

Das relativ dichte Gehäuse (10) weist ggf. z.B. im Bereich der Anflanschstellen eine Gewindebohrung auf, die in der Regel mittels eines Gewindestifts verschlossen ist. Soll jedoch die Vorrichtung in einem Reinstraum verwendet werden, wird über die Gewindebohrung ein Unterdruckschlauch angeschlossen, um die in den Gehäuseinnenraum gelangte Umgebungsluft abzusaugen.

Wird die Vorrichtung dagegen z.B. in besonders staubhaltiger Umgebung eingesetzt, wird das Gehäuseinnere über einen an dieser Gewindebohrung angeschlossenen Überdruckschlauch mit sauberer Sperrluft versorgt. Durch den Überdruck an den Arbeitsfugen kann so kein Schmutz in das Gehäuseinnere eindringen.

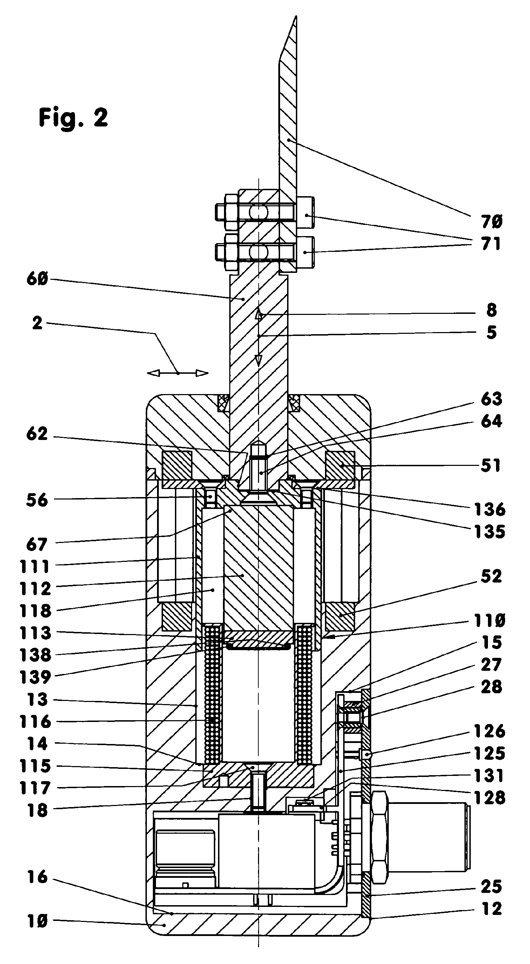

Das im Stellgliedgehäuse (10) eingebaute Stellglied (110) besteht aus einem ortsfesten und einem linear beweglichen Teil, vgl. auch Figur 2. Das ortsfeste Teil ist eine Spule, die aus einem Spulenkörper (115) und einer Wicklung (116) besteht. Der Spülenkörper (115) ist mittels einer Schraube (117) am Grund der Stufenbohrung (13) des Stellgliedgehäuses (10) festgeschraubt. Der Spulenkörper (115) ist beispielsweise aus Kunststoff oder einer Aluminiumlegierung hergestellt.

Das bewegliche Teil des Stellglieds (110) ist der Topfmagnet (111, 112, 113). Er ist ein aus einem außen gasnitrierten Einsatzstahl gefertigter Topf bzw. Glocke (111), in der ein zylindrischer Magnetkern (112), z.B. ein Neodym-Magnet, eingelassen ist. Der Magnetkern (112) kann auch die Form eines zylindrischen Rohres aufweisen. Am unteren Ende des Magnetkerns (112) ist eine aus dem Werkstoff X90CrMoV18 gefertigte Jochplatte (113) angeordnet. Hierbei schließt die Unterseite der Jochplatte (113), die auch eine zentrale Bohrung aufweisen kann, zumindest annähernd mit der unteren Kante der Glocke (111) ab. In der Unterseite der Jochplatte (113) ist eine Hinterschneidung (138) eingearbeitet, die einen als Anschlagpuffer dienenden O-Ring (139) trägt. Ggf. ist der O-Ring im Bereich der Hinterschneidung (138) mit der Jochplatte verklebt.

Der Magnetkern (112) und die Jochplatte (113) haben zumindest annähernd den gleichen Außendurchmesser. Beide Teile (112, 113) sind untereinander und gegenüber der Glocke (111) z.B. verklebt.

Zwischen dem Verbund aus Magnetkern (112) und Jochplatte (113) und der radialen Innenkontur der Glocke (111) befindet sich ein Ringspalt (118), in den die Spule (115, 116) mit geringem radialem Spiel nahezu vollständig hineinragt.

Die Glocke (111) hat bereichsweise eine zylindrische Außenwandung, die äquidistant geteilt z.B. vier Planflächen aufweist, wobei je zwei Planflächen (119) einander parallel gegenüberliegen. Diese Planflächen (119) liegen mit geringem Führungsspiel, es beträgt z.B. ca. 0,02 mm, gleitgelagert an den planen Flanken (42) des Gehäuses (10) an.

Eine Verdrehsicherung zwischen der Glocke (111) und der Ausnehmung (13) kann erzielt werden, wenn die Querschnitte von Glocke (111) und Ausnehmung (13) im Führungsbereich eine ovale, polygonale oder ähnliche Form aufweisen.

Um einen Druckausgleich zwischen der Ober- und der Unterseite der Glocke (111) - beim schnellen Ein- und Ausfahren des Schlittens (60) - zu ermöglichen, befindet sich zwischen den Ausrundungen (43) der Ausnehmung (13) des Gehäuses (10) und der Glocke (111) vier im Querschnitt sichelförmige Spalte (48), vgl. Figur 4.

In der oberen Stirnseite der Glocke (111) befinden sich im Randbereich zwei einander gegenüberliegende Einfräsungen (136), in die verschraubt jeweils eine Halteplatte (55) eingepasst ist. Die Oberseiten der Halteplatten (55) fluchten mit der Oberseite der Glocke (111). Die von der Glocke (111) seitlich abstehenden Halteplatten (55) ragen bei montierter Vorrichtung in die Verbreiterungen (45) der Ausnehmung (13) hinein.

Mittig weist die obere Stirnseite der Glocke (111) eine Einsenkung (135) auf, an der der Schlitten (60) mittels einer Schraube (64) befestigt ist. Der Schlitten (60) ist im Wesentlichen ein zylindrischer Körper, der an seinem einen Ende eine Zentriereindrehung (62) und eine Gewindebohrung (63) aufweist, während an seinem anderen Ende ein vierkantförmiger Adapterabschnitt (66) angeformt ist. Über die Zentriereindrehung (62) sitzt er in der Einsenkung (135) der Glocke (111). Die zylindrische Außenwandung des Schlittens (60), sie hat bei dem Vereinzlertyp einen Durchmesser von 12 mm, ist als Führungsfläche (61) feinbearbeitet.

Im Adapterabschnitt (66), vgl. Figur 2, sind beispielsweise vier Querbohrungen (67, 68) angeordnet. Je zwei Bohrungen (67) und (68) schneiden sich senkrecht.

Im Bereich der zwischen dem Schlitten (60) und der Glocke (111) gelegenen Montagefuge ist ein eng am Schlitten (60) anliegender O-Ring (65) positioniert, vgl. Figur 1. Der O-Ring (65) dient als Anschlagdämpfer für den ausfahrenden Schlitten (60).

Wird nun z.B. zum Ausfahren des Schlittens (60) ein kurzer Gleichstromstoß auf die Wicklung (116) gegeben, wird der Magnetkern (112) schlagartig aus dem Spulenkörper (115) geschoben. Der Stromstoß dauert beispielsweise bei einer Spannung von 24 V und einem Strom vom 5 A ca. 20 msec an. Der mit dem Magnetkern (112) gekoppelte Schlitten (60) fährt aus, bis der O-Ring (65) durch seine Anlage am Deckel (30) abgebremst wird. Die Bestromung kann auch zeit- oder weggesteuert entlang des Schlittenhubs variiert werden. Beispielsweise wird für ca. 5 msec zum Beschleunigen ein Strom von 5 A verwendet. Dieser wird dann für eine Restbestromungszeit von ca. 15 msec auf 3 A abgesenkt. Die reine Aus- und Einfahrkraft des elektrodynamischen Stellglieds beträgt - unter Vernachlässigung von Reibung und Massenkräften - zu Beginn der Beschleunigung hier ca. 12 N.

Ggf. wird die Glocke (111) in einer oder beiden Endlagen durch einen an der Wicklung (116) angelegten Kriechstrom gehalten.

In seiner dortigen Endlage wird der Schlitten (60) über die beiden Permanentmagnete (51) gehalten. An ihnen liegen die von der Glocke (111) seitlich abstehenden Halteplatten (55) an. Die Haltekraft dieser permanentmagnetischen Kupplung beträgt beim gezeigten Ausführungsbeispiel ca. 6 N, wobei die Halteplatten (55) und die Magnete (51) - bedingt durch den O-Ring (65) - einen Spaltabstand von 0,2 bis 0,4 mm haben. Die Haltekraft wird je nach Vereinzlerbaugröße, Verwendungszweck und Stellgliedauslegung z.B. zwischen 5 und 20 N festgelegt, wobei die reine Aus- und Einfahrkraft des Stellglieds (110) jeweils mindestens doppelt so groß ist.

In der eingefahrenen Position liegen die Halteplatten (55) vor dem Magneten (52). Die permanentmagnetische Kupplung gewährleistet ein sicheres Halten des Schlittens (60) auch bei einer vibrationsbelasteten Überkopflage des Vereinzlers.

Der Vereinzler verfügt zusätzlich über eine Positionsüberwachung des Schlittens (60). Dazu sitzt auf der Platine (128) ein Hallsensor (131). Dieser ist somit unterhalb des Stellglieds (110) im Stellgliedgehäuse (10) angeordnet. Der Hallsensor (131) liefert beispielsweise ein verstärktes und temperaturkompensiertes Gleichspannungssignal, das sich proportional zur magnetischen Flussdichte des sich axial zum Sensor bewegenden Magnetkerns (112) ändert. Die zu den Stellgliedendlagen passenden Gleichspannungssignale werden in einer Auswerteelektronik derart aufbereitet, dass für das Erreichen jeder Endlage eine separate Leuchtdiode bestromt wird. Der Sensor (131) kann auch Schlittenzwischenpositionen dedektieren, um z.B. damit eine Stromstärkenänderung des Antriebs zu steuern.

Die gehäuseseitigen LEDs können somit zumindest die Schlittenpositionen "ausgefahren" und "eingefahren" visuell anzeigen. Selbstverständlich können diese Signale auch über den Gerätestecker (127) an eine externe Vorrichtungssteuerung weitergegeben werden.

### Bezugszeichenliste:

- 2: Querrichtung
- 5: Führungslängsrichtung
- 8: Ausfahrrichtung, Führungslängsrichtung

- 10: Gehäuse, Stellgliedgehäuse, Gehäuseteile
- 11: Oberseite
- 12: Wandung, rechts
- 13: Stufenbohrung; Ausnehmung, oben
- 14: Bund
- 15: Ausnehmung, flach
- 16: Ausnehmung, tief
- 17: Bohrung, Verbindungsbohrungen
- 18: Gewindebohrung
- 19: Passstiftbohrungen
- 20: Gewindebohrung

- 21: Schrauben für Gehäuseverschraubung
- 22: Passstifte in Montagefuge

- 25: Gehäusedeckel, seitlich
- 26: Bohrungen für LED's
- 27: Distanzhülse
- 28: Spezialverschraubung

- 30: Gehäusedeckel; Gehäuseteile
- 31: Bohrung, zentral
- 32: Eindrehung, außen
- 33: Eindrehung, innen
- 34: Verschraubungsbohrungen mit Senkungen
- 35: Passstiftbohrungen
- 36: Sacklochbohrung für Magnete
- 37: Befestigungsbohrungen, seitlich
- 38: Passstiftbohrungen, seitlich
- 39: Lippendichtring

- 41: Bereich von (13), rechteckig, Mitte
- 42: Flanken, plane
- 43: Ausrundungen
- 45: Verbreiterungen von (13), langlochartig
- 46: Boden
- 47: Sacklöcher
- 48: Spalte, sichelförmig

- 51: Haltemagnete, ausgefahrene Position
- 52: Haltemagnete, eingefahrene Position

- 55: Halteplatten
- 56: Senkschrauben

- 60: Schlitten
- 61: Führungsfläche, zylindrisch
- 62: Zentriereindrehung
- 63: Gewindebohrung
- 64: Senkschraube
- 65: O-Ring
- 66: Adapterabschnitt, vierkantförmig
- 67: Bohrungen
- 68: Bohrungen, quer zu (66)
- 69: Mittellinie

- 70: Stößel
- 71: Verschraubung

- 110: Stellglied
- 111: Glocke, Topf; Teil des Topfmagnets
- 112: Magnetkern, Permanentmagnet; Teil des Topfmagnets
- 113: Jochplatte; Teil des Topfmagnets
- 115: Spulenkörper, ortsfest; Spule
- 116: Wicklung, Spule
- 117: Schraube
- 118: Ringspalt
- 119: Planflächen

- 120: Ansteuerung
- 121: Platine, horizontal
- 122: Aufsatzplatine, vertikal
- 123: Steckkontakte
- 124: Kondensator
- 125: Platine, vertikal
- 126: Leuchtdioden, LEDs
- 127: Gerätestecker
- 128: Aufsatzplatine

- 131: Hallsensor
- 132: Filmplatine, flexibel

- 135: Einsenkung, zentral in (111)
- 136: Einfräsung, außen
- 138: Hinterschneidung an (113)
- 139: O-Ring

## Patentansprüche

1. Vereinzler mit einem Gehäuse (10, 30), mit einem verschiebbaren Schlitten (60), wobei der Schlitten (60) im Gehäuse (10, 30) gelagert ist und teilweise über das Gehäuse (10,30) hinausragt, mit einem am freien Ende des Schlittens (60) angeordneten Stößel (70) und mit einem im Gehäuse (10, 30) gelagerten Stellglied (110),
- wobei das Stellglied (110) auf den verschiebbaren Schlitten (60) wirkt, um den Stößel (70) zwischen einer eingefahrenen und einer ausgefahrenen Stellung zu bewegen,
- wobei das Stellglied (110) einen ortsfesten und einen beweglichen Teil aufweist und der Schlitten (60) starr am beweglichen Teil angeordnet ist und
- wobei der ortsfeste Teil des Stellglieds (110) - zum Antreiben des beweglichen Teils des Stellgliedes (110) in beide Richtungen - aus einer elektrisch bestrombaren Spule (115, 116) besteht,
**dadurch gekennzeichnet,**
- **dass** der bewegliche Teil des Stellglieds (110) ein Topfmagnet (111, 112, 113) ist, wobei der Topfmagnet (111, 112, 113) aus einem aus einem Einsatzstahl gefertigten Topf (111) besteht, in dem ein permanentmagnetischer Kern (112) eingelassen ist, wobei sich ein Ringspalt (118) zwischen der Innenkontur des Topfes (111) und dem permanentmagnetischen Kern (112) befindet, in den die Spule (115, 116) hineinragt.

2. Vereinzler gemäß Anspruch 1, **dadurch gekennzeichnet, dass** an dem Ende des Topfmagneten (111, 112, 113) beidseits magnetisierbare Halteplatten (55) angeordnet sind.

3. Vereinzler gemäß Anspruch 2, **dadurch gekennzeichnet, dass** der im Wesentlichen zylindrische Topf (111) des Topfmagnets (111, 112, 113) an seiner zylindrischen Außenfläche vier sich paarweise gegenüberliegende Planflächen (119) aufweist.

4. vereinzler gemäß Anspruch 3, **dadurch gekennzeichnet, dass** das Gehäuse (10) zur Führung des Topfmagnets (111, 112, 113) eine Ausnehmung (13) aufweist, deren Innenwandung bereichsweise vier plane Flanken (42) hat.

5. Vereinzler gemäß Anspruch 2, **dadurch gekennzeichnet, dass** im Gehäuse (10) Magnete (51, 52) angeordnet sind, an denen sich in mindestens einer Schlittenendlage die Halteplatten (55) anlegen und in magnetische Wechselwirkung treten.

6. Vereinzler gemäß Anspruch 1, **dadurch gekennzeichnet, dass** der Schlitten (60) in dem Abschnitt, der das Gehäuse (10) nicht verlässt, eine zylindrische und fein bearbeitete Oberfläche aufweist.

7. Vereinzler gemäß Anspruch 1, **dadurch gekennzeichnet, dass** der Innenraum des Gehäuses (10, 30) zur Umgebung hin abgedichtet ist.

8. Vereinzler gemäß Anspruch 1, **dadurch gekennzeichnet, dass** das oder die Stellglieder (110) mittels eines impulsartigen Stromstoßes angetrieben werden.

## Claims

1. A separator comprising a housing (10, 30), a slidingly movable carriage member (60), said carriage member (60) mounted in and partly extending from the housing (10, 30), a pusher element (70) disposed on the free end of the carriage member (60) and an actuator (110) mounted inside housing (10, 30),
- said actuator (110) acting upon the slidingly movable carriage member (60) so as to move the pusher element (70) between retracted and advanced positions,
- said actuator (110) having a stationary and a movable portion, with the carriage member (60) rigidly mounted on said movable portion, and
- the stationary portion of the actuator (110) comprising a coil adapted to be powered electrically to drive the movable portion of the actuator (110) in either direction;
**characterized in that**
- the movable portion of the actuator (110) comprises a pot magnet (111, 112, 113), said pot magnet comprising a pot member (111) made of case-hardened steel and having inserted therein a permanently magnetic core (112), with an annular ring gap (118) defined between the inner periphery of pot (111) and the permanently magnetic core (112) and with the coil (115, 116) extending into said gap (118).

2. Separator as claimed in claim 1, **characterized by** magnetizable retainer plates (55) disposed at the end of the pot magnet (111, 112, 113) on both sides thereof.

3. Separator as claimed in claim 2, **characterized in that** the substantially cylindrical pot (111) of the pot magnet (111, 112, 213) has at is cylindrical exterior surface four planar surfaces (119) arranged in opposite pairs.

4. Separator as claimed in claim 3, **characterized in that** the housing (10) includes therein for guiding the pot magnet (111, 112, 113) a recess (13) having four planar flats (42) on portions of its interior walls.

5. Separator as claimed in claim 2, **characterized by** comprising in the housing (10) magnets (51, 52) engaging and magnetically interacting with the retainer plates (55) in at least one end position of the carriage member.

6. Separator as claimed in claim 1, **characterized in** the carriage member (60) having in the portion thereof not leaving the housing (10) a precision finished cylindrical surface.

7. Separator as claimed in claim 1, **characterized by** the interior space of the housing (10,30) being sealed tight against the environment.

8. Separator as claimed in claim 1, **characterized by** the actuator(-s) (110) being operated by pulsed electrical power.

## Revendications

1. Dispositif de séparation comprenant un boîtier (10, 30) et un chariot mobile (60), le chariot (60) étant logé dans le boîtier (10, 30) et dépassant partiellement du boîtier (10, 30), et un poussoir (70) disposé à l'extrémité libre du chariot (60) ainsi qu'un actionneur (110) logé dans le boîtier (10, 30),
- l'actionneur (110) agissant sur le chariot mobile (60) afin de déplacer le poussoir (70) entre une position rétractée et une position déployée,
- l'actionneur (110) présentant une partie fixe et une partie mobile et le chariot (60) étant disposé de façon rigide sur la partie mobile et
- la partie fixe de l'actionneur (110) - pour la commande de la partie mobile de l'actionneur (110) dans les deux directions - comprenant une bobine (115, 116) qui peut être alimentée en courant électrique,
**caractérisé en ce**
- **que** la partie mobile de l'actionneur (110) est un aimant en pot (111, 112, 113), l'aimant en pot (111, 112, 113) étant composé d'un pot (112) en acier de cémentation dans lequel est encastré un noyau à aimantation permanente (112), une fente annulaire (118) se trouvant entre le contour intérieur du pot (111) et le noyau à aimantation permanente (112) dans laquelle fait saillie la bobine (115, 116).

2. Dispositif de séparation selon la revendication 1, **caractérisé en ce que** des plaques de retenue (55) magnétisables sont disposées de part et d'autre, à l'extrémité de l'aimant en pot (111, 112, 113).

3. Dispositif de séparation selon la revendication 2, **caractérisé en ce que** l'aimant en pot (111, 112, 113), donl le pot (111) est de forme généralement cylindrique présente à sa surface cylindrique quatre surfaces planes (119) qui se font face par paires.

4. Dispositif de séparation selon la revendication 3, **caractérisé en ce que** pour guider l'aimant en pot (111, 112, 113) le boîtier (10) présente un évidement (13) dont la paroi intérieure présente par endroits quatre surfaces planes (42).

5. Dispositif de séparation selon la revendication 2, **caractérisé en ce que** des aimants (51, 52) sont disposés dans le boîtier (10) sur lesquelles, dans au moins une position finale du chariot, s'appliquent les plaques de retenue (55) et entrent en interaction magnétique.

6. Dispositif de séparation selon la revendication 1, **caractérisé en ce que** le chariot (60) présente une surface cylindrique et finement travaillée dans la partie qui ne quitte pas le boîtier (10).

7. Dispositif de séparation selon la revendication 1, **caractérisé en ce que** l'espace intérieur du boîtier (10, 30) est isolé de façon étanche par rapport à l'extérieur.

8. Dispositif de séparation selon la revendication 1, **caractérisé en ce que** l'actionneur ou les actionneurs (110) sont commandés par une impulsion de courant.
